# EUROPÄISCHE PATENTANMELDUNG

(11) **EP 1 030 259 A1**
(43) Veröffentlichungstag der Anmeldung: **23.08.2000**
(21) Anmeldenummer: 99103282.2
(22) Anmeldetag: 19.02.1999
(51) Int. Cl.: G06F 17/60

(54) **Datenbanksystem mit Barcodeleser**

(71) Anmelder: Knapp Logistik Automation Gesellschaft MBH, 8075 Hart bei Graz (AT)
(72) Erfinder: Wünscher, Eduard Dipl.-Ing., 8075 Hart bei Graz (AT)
(74) Vertreter: Hanke, Hilmar

(57) **Zusammenfassung**

Ein Computersystem (1) weist Datenbanken (10) mit jeweils einer Vielzahl von Datensätzen auf, wobei jedem Datensatz wenigstens ein Zwischencode zugeordnet ist und wobei die Zwischencodes je einer Datenbank wenigstens eine übereinstimmende Formatinformation aufweisen. Ein mit einem Barcodeleser (3) eingelesener Barcode (7) wird in einen zugeordneten Zwischencode umgewandelt, wobei Formatinformationen aus dem Zwischencode und aus dem externen Code dekodiert werden. In Abhängigkeit der so ermittelten Formatinformationen wird zunächst eine Datenbank (10) und dann ein dem Zwischencode zugeordneter Datensatz aus der ausgewählten Datenbank (10) ausgewählt.

## Beschreibung

Die Erfindung betrifft ein Computersystem, das mehrere Datenbanken mit jeweils einer Vielzahl von Datensätzen aufweist sowie ein Verfahren zum Betreiben eines solchen Computersystems.

Im Stand der Technik sind Computersysteme bekannt, die mehrere Datenbanken mit jeweils einer Vielzahl von Datensätzen aufweisen, wobei jedem Datensatz wenigstens ein Zwischencode zugeordnet ist. Das Computersystem hat weiterhin eine Leseeinrichtung zum Einlesen eines externen Codes, insbesondere eines Barcodes. Nach dem Einlesen des externen Codes wird dieser in einen Zwischencode umgewandelt, der beispielsweise als ASCII-Code codiert ist.

Zur Identifizierung und Anzeige eines Datensatzes, der einem bestimmten Zwischencode zugeordnet ist, der einem eingelesenen externen Code entspricht, wird folgendermaßen vorgegangen. Zunächst wird der eingelesene externe Code in einen zugeordneten Zwischencode umgewandelt. Danach wird je nach der momentan ablaufenden Anwendung auf dem Computersystem eine bestimmte Datenbank ausgewählt und anhand des Zwischencodes der betreffende Datensatz bestimmt und anschließend ausgegeben. Auf entsprechende Weise können bestimmte Datensätze auch abgeändert werden.

Die gattungsgemäßen Computersysteme werden beispielsweise in Kommissionieranlagen für die Materialwirtschaft verwendet, um Informationen mit Barcodes zu verwalten. Auf diese Weise können Behälternummern, Produktidentifikationen und Lagerorte auf einfache Weise und maschinenlesbar verwaltet werden.

Bei den bekannten Kommissionieranlagen ist von Nachteil, daß diese sehr unflexibel zu bedienen sind. So können häufig Informationen aus den Datenbanken nicht abgefragt werden, weil das Computersystem unrichtigerweise eine Meldung ausgibt, daß zu einem Barcode kein entsprechender Datensatz vorhanden sei.

Es ist Aufgabe der Erfindung, ein Computersystem sowie ein Verfahren zum Betreiben eines Computersystems bereitzustellen, mit dem sich eine hohe Sicherheit bei der Anwendung und ein hohes Maß an Flexibilität und Geschwindigkeit ergibt.

Diese Aufgabe wird durch den Gegenstand der unabhängigen Absprüche gelöst. Vorteilhafte Ausgestaltungen ergeben sich aus den jeweiligen Unteransprüchen.

Gemäß der Erfindung weisen Zwischencodes je einer Datenbank eines Computersystems wenigstens eine übereinstimmende Formatinformation auf, wobei einzelne der Datenbanken in Abhängigkeit einer eingelesenen Formatinformation auswählbar sind. Dabei ist das Computersystem weiterhin so ausgebildet, daß Formatinformationen aus dem Zwischencode und/oder externen Code decodierbar sind.

Ein Grundgedanke der Erfindung besteht darin, das erfindungsgemäße Computersystem so zu betreiben, daß nach dem Einlesen eines externen Codes dieser nicht nur in einen Zwischencode umgewandelt wird, sondern daß darüber hinaus Formatinformationen aus dem Zwischencode und/oder aus dem externen Code decodiert werden. Mit diesen decodierten Formatinformationen wird aus der Vielzahl der Datenbanken des Computersystems eine oder mehrere Datenbanken ausgewählt und diese nach Übereinstimmungen hinsichtlich des Zwischencodes abgefragt. Dadurch ergibt sich ein erheblicher Geschwindigkeitsvorteil gegenüber dem weiterhin denkbaren Durchsuchen jeder einzelnen Datenbank nach Übereinstimmungen mit dem umgewandelten Zwischencode.

Die Erfindung nutzt dabei den Umstand, daß als Barcodes ausgebildete externe Codes häufig inhärente Formatinformationen aufweisen, die von handelsüblichen Barcodelesern beim Einlesen eines Barcodes ermittelt werden. So sind beispielsweise "EAN"-, "UPCA"- und "CODE 39"-Codierungen bekannt. Wenn bei einem eingelesenen Barcode eine solche Formatinformation decodiert wird, dann brauchen nicht mehr alle Datenbanken nach Übereinstimmungen hinsichtlich des umgewandelten Zwischencodes untersucht werden, sondern nur noch diejenigen Datenbanken, die Datensätze mit Zwischencodes aufweisen, die eine zur eingelesenen Formatinformation übereinstimmende Formatinformation aufweisen.

Gemäß der Erfindung können Formatinformationen nicht nur aus dem externen Code decodiert werden, sondern auch aus dem Zwischencode selbst. So kann beispielsweise abgetastet werden, ob ein durch Umwandlung eines externen Codes gewonnener Zwischencode einem bestimmten Datentyp entspricht. So ist es bekannt, Zwischencodes als rein numerische Datentypen und als alphanumerische Datentypen abzuspeichern. Durch eine entsprechende Decodierung des Zwischencodes können diejenigen Datenbanken gezielt ausgewählt werden, die Datensätze mit Zwischencodes gemäß entsprechenden Datentypen aufweisen. Andere Datenbanken, die Zwischencodes mit anderen Datentypen aufweisen, können gezielt ausgeschieden werden.

Mit der Funktionalität des mit einem erfindungsgemäßen Verfahren betriebenen Computersystems können auf einfache Weise beliebige externe Codes danach identifiziert werden, ob in einer von vielen Datenbanken des Computersystems zugeordnete Datensätze vorhanden sind. Dies ist bei den im Stand der Technik vorhandenen Computersystemen nicht oder nur mit sehr großem Zeitaufwand möglich, indem die Datenbanken einzeln durchsucht werden. Bei sehr großen Datenbanken ist dies mit anderen Verfahren aus Zeitgründen und wegen nicht vertretbarer Auslastungen des Computersystems bei Suchläufen sogar ganz unmöglich.

Die Erfindung ist nicht auf Barcodes an sich beschränkt, sondern auch auf andere externe Codes wie beispielsweise Kennungen von Transpondern, Magnetstreifeninformationen usw. anwendbar.

Der Schritt des Dekodierens von Formatinformationen aus dem Zwischencode kann auch den Schritt des Bestimmens der Länge des Zwischencodes umfassen. Weiterhin ist es denkbar, nach bestimmten Mustern im Zwischencode zu suchen, die sich beispielsweise aus an bestimmten Stellen vorgesehenen Trennstrichen ergeben.

Das erfindungsgemäße Verfahren kann auch den Schritt des Anzeigens des dem Zwischencode zugeordneten Datensatzes beinhalten, wobei auch eine Meldung "unbekannnter Barcode" anzeigbar ist, sofern kein dem Zwischencode zugeordneter Datensatz im Computersystem ausgewählt werden kann.

Das erfindungsgemäße Computersystem ist vorzugsweise als Datenbanksystem mit einem Barcodeleser ausgebildet wie es häufig in Kommissionieranlagen verwendet wird.

Mit der Erfindung können beliebige Barcodes an beliebiger Stelle gelesen werden und alle zugehörigen in einem Steuerrechner gespeicherten Informationen und auch deren Verknüpfungen abgefragt werden. Das Einlesen geschieht vorzugsweise über Handscanner und Funkterminals, wobei auch ein Eintippen des Barcodes in ein festinstalliertes Terminal vorgesehen ist.

Gerade beim Einsatz in einer Kommissionieranlage können Barcodes willkürlich und ohne Ausführen einer vorbestimmten Anwendung eingelesen und identifiziert werden, die die folgenden Informationen beinhalten:
- Behälternummern
- Produktbarcodes
- Lagerorte
- Stationsnummern (Arbeitsplatz/Abteilung)
- Auftragsnummern auf Lieferscheinen
- Rampennummern im Versand (Kfz-Verladerampe)
- Tourennummern (Fahrt/Route).

Mit dem erfindungsgemäßen Computersystem können weiterhin Barcodes an jedem Ort innerhalb eines Lagers eingelesen werden, wobei nicht eingegeben werden muß, welche Art von Informationen in dem eingelesenen Barcode verschlüsselt sind. Mit dem erfindungsgemäßen Computersystem können somit von überall nach überall Informationen bekommen werden.

In einer ersten Anwendungsvariante der Erfindung wird zunächst die Nummer einer Station eingescannt. Daraufhin ist die Liste aller Aufträge abrufbar, die zur Zeit in dieser Station bearbeitet werden. Zu den Aufträgen sind die entsprechenden Auftragsdaten wie beispielsweise Auftraggeber, Adresse, usw. abrufbar. Zu den Auftragsdaten ist die Auftragszeile abrufbar (Produkt). Zu dieser Auftragszeile ist die Produktinformation aufrufbar, die angibt, um welches Produkt es sich handelt. Zu dieser Produktinformation ist der Lagerort abrufbar. Diese Funktionalität ist durch das entsprechende Hinterlegen der zugehörigen Datensätze in einer geeigneten Datenbank möglich. Dabei ergibt sich durch das Verwenden eines "Entity-Relationship-Diagramms" der Datenbank eine Beschreibung der Datensätze der Datenbank sowie deren Verbindungen untereinander.

Gemäß einer weiteren möglichen Anwendung kann bei einem ohne nähere Bestimmung am Boden liegenden Produkt durch Einscannen des an dem Produkt vorhandenen Barcodes dessen Lagerort, Lagerstand, die Aufträge, in denen es vorkommt usw. über ein Funkterminal erfragt werden.

Die Erfindung ist in der Zeichnung anhand eines Ausführungsbeispiels näher veranschaulicht.
- Figur 1: zeigt eine schematische Darstellung eines erfindungsgemäßen Computersystems,
- Figur 2: zeigt eine Barcode-Tabelle, die in dem Computersystem aus Figur 1 verwendet wird,
- Figur 3: zeigt eine Datenbank-Tabelle, die in dem Computersystem aus Figur 1 verwendet wird,
- Figur 4: zeigt ein Listing eines auf dem Computersystem gemäß Figur 1 ablaufenden Hauptprogramms,
- Figur 5: zeigt ein Listing einer Funktion check_scan_feld, auf die in dem Hauptprogramm aus Figur 4 zugegriffen wird, und
- Figur 6: zeigt ein Struktogramm eines Teils des auf dem Computersystem gemäß Figur 1 ablaufenden EDV-Programms.

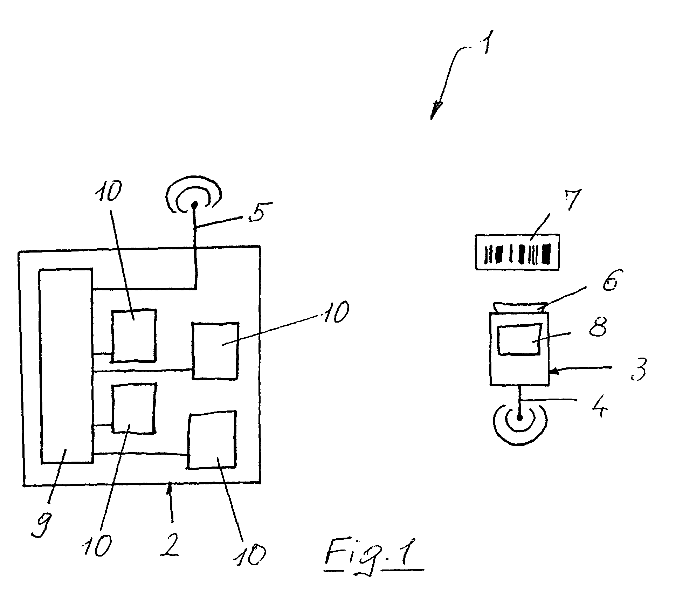

Figur 1 zeigt eine schematische Darstellung eines erfindungsgemäßen Computersystems 1, das als Bestandteil eines Kommissioniersystems zur Verwaltung des Umschlags von Waren verwendet wird. Das Computersystem 1 gliedert sich in einen Zentralrechner 2 und in einen Funkscanner 3.

Der Funkscanner weist eine Funkscannerantenne 4 auf, mit der er über eine am Zentralrechner 2 vorgesehene Zentralrechnerantenne 5 mit dem Zentralrechner 2 in Verbindung steht. Weiterhin hat der Funkscanner 3 eine Barcodeleseeinrichtung 6, mit der ein im Bereich des Funkscanners 3 vorgesehener Barcode 7 einlesbar ist. Schließlich hat der Funkscanner 3 noch ein Display 8 zum Ausgeben von Informationen.

Der Zentralrechner 2 hat eine Steuerungseinheit 9 sowie eine Vielzahl von mit der Steuerungseinheit 9 verbundenen Datenbanken 10, wobei die Steuerungseinheit 9 durch ein EDV-Programm gesteuert wird.

Im Betrieb des Computersystems 1 wird ein Barcode 7 vom Funkscanner 3 eingelesen, in einen Zwischencode umgewandelt und zusammen mit Formatinformationen zum Barcode 7 bzw. zum Zwischencode an den Zentralrechner 2 übertragen. Der Zentralrechner 2 wertet die empfangenen Informationen unter Zugriff auf die Datenbanken 10 aus und übermittelt Informationen zum Funkscanner 3 zurück, wo sie auf dem Display 8 anzeigbar sind. Darüber hinaus können durch Zusammenwirken des Funkscanners 3 mit dem Zentralrechner 2 auch Informationen in den Datenbanken 10 abgeändert werden.

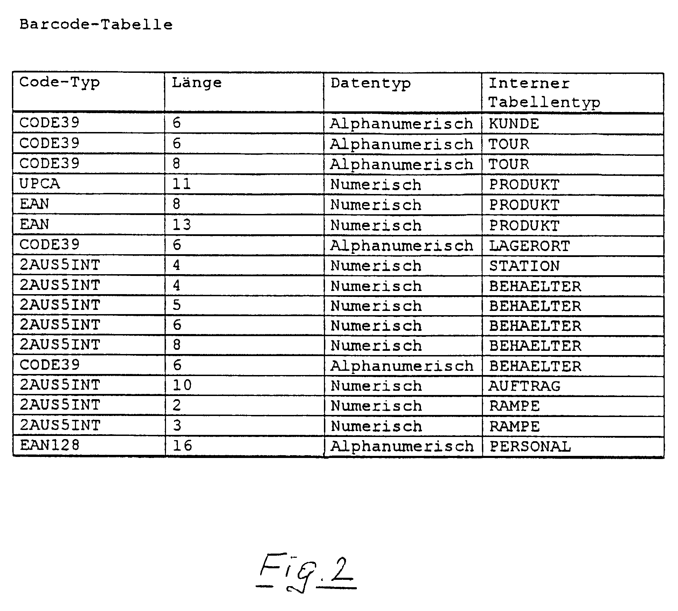

Figur 2 zeigt eine Barcode-Tabelle, auf die beim Ablauf des EDV-Programms des Zentralrechners zugegriffen wird.

Die Barcode-Tabelle ist in insgesamt 4 Spalten mit 18 Zeilen aufgeteilt, wobei die erste, oberste Zeile lediglich der besseren Übersicht halber angegeben ist und vom EDV-Programm nicht verwendet wird. In der ersten Zeile ist angegeben, welche Information in den übrigen Feldern der jeweiligen Spalte aufgenommen ist. Dabei geben die in den Feldern jeweils einer Zeile aufgenommenen Informationen den Zusammenhang zwischen dem Code-Typ eines vom Funkscanner 3 eingelesenen Barcodes 7, der Länge und des Datentyps des durch Umwandlung des Barcodes 7 gewonnen externen Codes und einem für die jeweiligen Informationen charakteristischen internen Tabellentyp einer der Datenbanken 10 an. Die Datenbanken 10 weisen insgesamt neun verschiedene interne Tabellentypen auf, nämlich KUNDE, TOUR, PRODUKT, LAGERORT, STATION, BEHAELTER, AUFTRAG, RAMPE, PERSONAL. Von den einlesbaren Barcodes sind insgesamt fünf verschiedene Code-Typen vorgesehen, nämlich CODE39, UPCA, EAN, 2AUS5INT und EAN128. Die in den Datenbanken 10 vorhandenen Zwischencodes, die durch Umwandlung aus den Barcodes 7 gewonnen werden, lassen sich in zehn verschiedene Längen und zwei verschiedene Datentypen einteilen, wie in den Spalten "Länge" und "Datentyp" der Barcode-Tabelle angegeben ist.

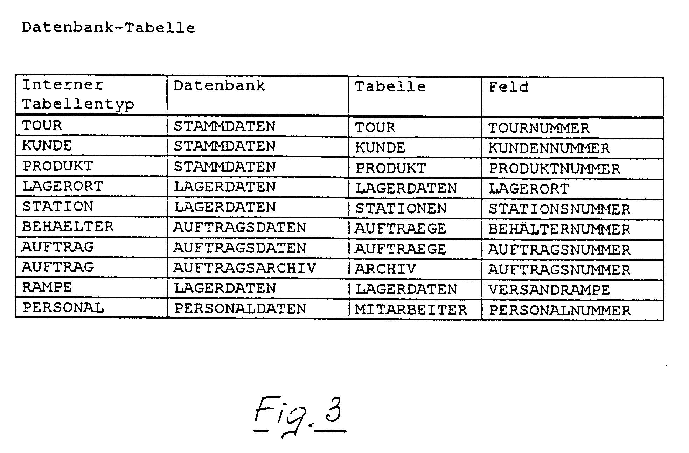

Figur 3 zeigt eine Datenbank-Tabelle, auf die das auf dem Computersystem 1 ablaufende EDV-Programm zugreift. Die Datenbank-Tabelle aus Figur 3 veranschaulicht den Zusammenhang zwischen den in der Barcode-Tabelle gemäß Figur 2 angegebenen internen Tabellentypen, zwischen den Datenbanken 10, zwischen bestimmten Tabellen innerhalb der Datenbanken 10 sowie zwischen Feldern innerhalb dieser Tabellen. Dabei gibt je eine Zeile der Datenbank-Tabelle den Zusammenhang zwischen einem bestimmten Feld innerhalb einer der Datenbanken 10 und der jeweiligen Tabelle, Datenbank bzw. dem betreffenden internen Tabellentyp gemäß der Barcode-Tabelle an.

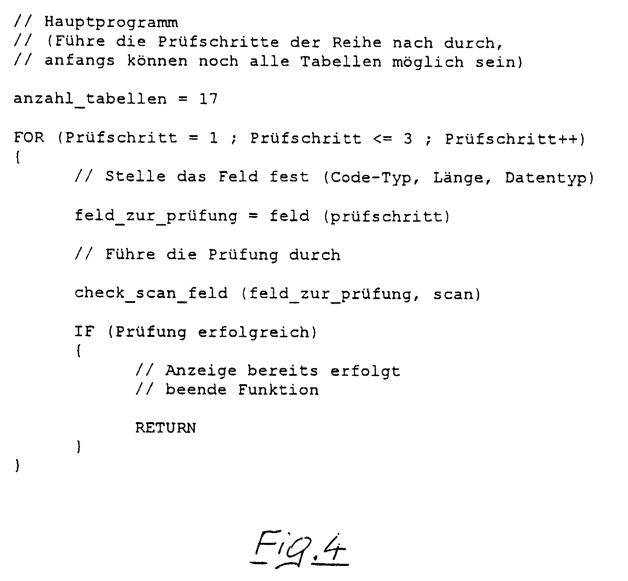

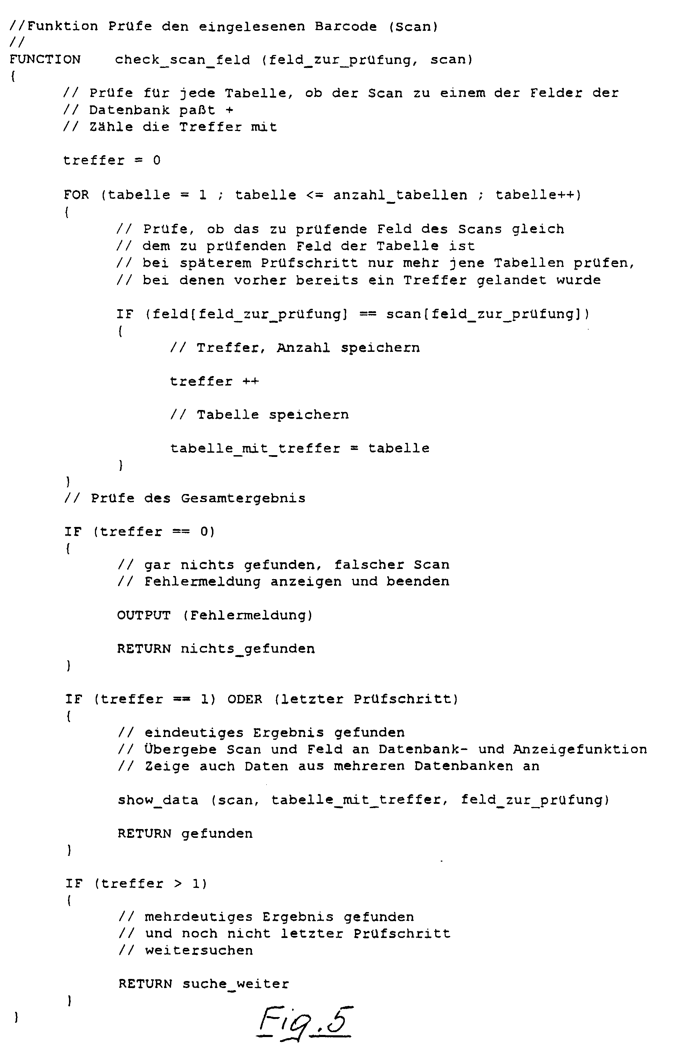

Figur 4 und Figur 5 zeigen ein Hauptprogramm und eine Funktion eines auf dem Computersystem 1 ablaufenden EDV-Programms.

Figur 4 zeigt ein Hauptprogramm, das die Funktion "check_scan_feld" aus Figur 5 aufruft. Dabei wird zunächst mit der Variablen "Prüfschritt" festgelegt, welche Spalte der Barcode-Tabelle aus Figur 2 nach einer Übereinstimmung mit einer vom Funkscanner 3 übermittelten Variablen "scan" überprüft wird.

Figur 5 zeigt ein Listing einer Funktion "check_scan_feld", mit der geprüft wird, ob ein vom Funkscanner 3 eingelesener Barcode bzw. ein daraus ermittelter Zwischencode einer bestimmten Datenbank der Datenbanken 10 bzw. einer darin organisierten Tabelle enthalten ist. Die Funktion "check_scan_feld" ist dabei als Pseudocode angegeben, der lediglich die wichtigsten Schritte des entsprechenden EDV-Programms veranschaulicht. Für das Verständnis der Erfindung weniger erhebliche Einzelheiten wurden weggelassen.

Der Funktion "check_scan_feld" werden dabei vom Hauptprogramm zwei Variablen übergeben, nämlich einmal in der Variablen "scan" die aus einem Barcode 7 bzw. dessen umgewandeltem Zwischencode gewonnen Formatinformationen gemäß den Spalten "Code-Typ", "Länge" bzw. "Datentyp" aus Figur 2 sowie der hier nicht gezeigte umgewandelte Zwischencode. In der Variablen "feld_zur_prüfung" wird der Funktion "check_scan_feld" mitgeteilt, welche der in dem durchgeführten Scan enthaltenen Formatinformationen aktuell anhand der Tabelle 2 überprüft wird.

Die Zeilen 11 bis 28 der Funktion "check_scan_feld" werden dabei so oft durchgeführt, bis alle Zeilen der Barcode-Tabelle aus Figur 2 überprüft sind. In den Zeilen 31 bis 59 der Funktion "check_scan_feld" wird das ermittelte Ergebnis ausgegeben, wobei unterschieden wird, ob der vom Funkscanner 3 eingescannte Barcode 7 gemäß der Barcode-Tabelle aus Figur 2 auf genau einen internen Tabellentyp hinweist, auf mehrere interne Tabellentypen hinweist oder auf keinen internen Tabellentyp hinweist.

Figur 5 weist zum besseren Verständnis Kommentare auf, die jeweils das genaue Vorgehen verdeutlichen.

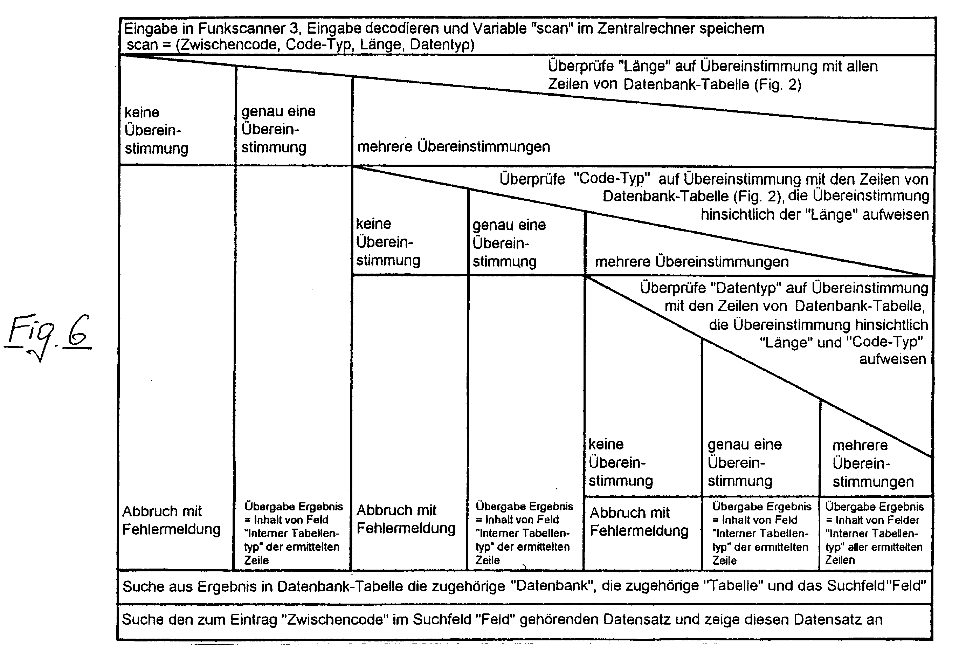

Figur 6 zeigt ein Struktogramm, das einen Teil des Ablaufs des EDV-Programms auf dem Computersystem 1 veranschaulicht.

Zunächst wird mit dem Barcode 7 eine Eingabe in den Funkscanner 3 getätigt, diese Eingabe decodiert und in einer Variablen "scan" im Zentralrechner 2 gespeichert. Die Variable "scan" enthält dann einen dem Barcode 7 zugeordneten Zwischencode, einen "Code-Typ" des Barcodes 7 sowie eine "Länge" und einen "Datentyp" des Zwischencodes, wie in der Barcode-Tabelle von Figur 2 angegeben ist. In einer ersten Unterscheidung wird überprüft, ob der Wert "Länge" in der Variablen "scan" Übereinstimmungen in wenigstens einer der Zeilen der Datenbank-Tabelle aus Figur 2 ergibt. Falls sich keine Übereinstimmung ergibt, wird die Auswahl mit einer Fehlermeldung "nicht_gefunden" abgebrochen. Falls sich genau eine Übereinstimmung ergibt, wird der Inhalt des Felds "Interner Tabellentyp" der ermittelten Zeile der Barcode-Tabelle in einer Variable "Ergebnis" übergeben. Falls sich mehrere übereinstimmungen ergeben, wird der Inhalt "Code-Typ" der Variable "scan" auf Übereinstimmung mit denjenigen Zeilen der Datenbank-Tabelle aus Figur 2 überprüft, die Übereinstimmungen hinsichtlich der "Länge" aufweisen.

Wenn sich bei der Überprüfung von "Code-Typ" der Variablen "scan" auf Übereinstimmungen mit denjenigen Zeilen der Datenbank-Tabelle aus Figur 2, die bereits Übereinstimmungen hinsichtlich der "Länge" aufweisen, keine Übereinstimmung ergibt, wird der Vorgang mit der Meldung "nichts gefunden" abgebrochen. Falls sich genau eine Übereinstimmung ergibt, wird der Inhalt des Felds "Interner Tabellentyp" der ermittelten Zeile der Datenbank-Tabelle aus Figur 2 an die Variable "Ergebnis" übergeben. Falls sich mehrere Übereinstimmungen ergeben, wird in einem nächsten Schritt der Inhalt von "Datentyp" der Variable "scan" auf Übereinstimmung mit denjenigen Zeilen der Datenbank-Tabelle überprüft, die bereits Übereinstimmungen hinsichtlich der Felder "Länge" und "Code-Typ" der Variablen "scan" aufweisen.

Falls sich bei der Überprüfung des Inhalts von "Datentyp" auf Übereinstimmung mit denjenigen Zeilen der Datenbank-Tabelle aus Figur 2, die bereits Übereinstimmungen hinsichtlich der Inhalte von "Länge" und "Code-Typ" aufweisen, keine Übereinstimmungen ergeben, wird die Überprüfung mit einer Fehlermeldung "nichts_gefunden" abgebrochen. Falls sich genau eine Übereinstimmung ergibt, wird der Inhalt des Felds "Interner Tabellentyp" der ermittelten Zeile in die Variable "Ergebnis" übergeben. Falls sich mehrere Übereinstimmungen ergeben, werden die Inhalte der Felder "Interner Tabellen-Typ" aller ermittelten Zeilen in die Variable "Ergebnis" übergeben.

In einem Schritt nach der Überprüfung wird, falls kein Abbruch mit einer Fehlermeldung "nichts_gefunden" erfolgte, aus dem Inhalt der Variablen "Ergebnis" in der Datenbank-Tabelle gemäß Figur 3 die zugehörige "Datenbank", die zugehörige "Tabelle" und das zugehörige Suchfeld "Feld" ermittelt. Bei mehreren Inhalten der Variablen "Ergebnis" werden entsprechend mehrere solche Informationen ermittelt.

Abschließend wird der zum Eintrag "Zwischencode" im Suchfeld "Feld" gehörende Datensatz in der zugehörigen "Tabelle", der zugehörigen "Datenbank" gesucht und angezeigt.

Die Funktion des Computersystem 1 wird nachfolgend mit Bezug auf fünf verschiedene Beispiele veranschaulicht.

### Beispiel 1:

Mit dem Funkscanner 3 wird ein Barcode 7 eingescannt, der eine Personalnummer aufweist. Daraufhin beinhaltet die Variable "scan" eine Formatinformation "Code-Typ" des Barcodes 7 von "EAN128". Außerdem weist die Variable "scan" Formatinformationen des decodierten Zwischencodes auf, nämlich eine "Länge" von "16" und einen "Datentyp" von "Alphanumerisch".

In einem ersten Prüfschritt wird das Feld "Länge" der Variablen "Scan" auf Übereinstimmungen mit Zeilen der Barcode-Tabelle gemäß Figur 2 überprüft. Dabei wird nur ein einziges Ergebnis erhalten, nämlich die letzten Zeile, die auf den internen Tabellentyp PERSONAL verweist. Daraufhin wird in der Datenbank-Tabelle gemäß Figur 3 aus dem "Internen Tabellen-typ" PERSONAL auf die Tabelle MITARBEITER in der Datenbank PERSONALDATEN verwiesen. Abschließend wird derjenige Datensatz der Tabelle MITARBEITER angezeigt, dessen "Feld" dem Zwischencode der Variablen "scan" entspricht. Wenn keine Daten gefunden werden, wird ein Wert "unbekannter Barcode" auf dem Display 8 des Funkscanners 3 angezeigt.

### Beispiel 2:

Mit dem Funkscanner 3 wird ein Barcode 7 eingescannt, der einer Auftragsnummer entspricht. Die Variable "scan" weist nach der Decodierung des Barcodes 7 eine Formatinformation "2AUS5INT" des Barcodes 7 auf. Weiterhin weist die Variable "scan" Formatinformationen des decodierten Zwischencodes auf, nämlich "Länge" = "10" und "Datentyp" = "Numerisch".

In einem ersten Prüfschritt wird die Variable "Länge" auf Übereinstimmungen mit allen Zeilen der Datenbank-Tabelle auf Figur 2 überprüft. Dabei ergibt sich eine Übereinstimmung, die auf den "Internen Tabellentyp" AUFTRAG hinweist.

Daraufhin werden in der Datenbank-Tabelle gemäß Figur 3 zwei Datenbanken aufgefunden, die einen "Internen Tabellentyp" AUFTRAG aufweisen, nämlich die Datenbank AUFTRAGSDATEN und die Datenbank AUFTRAGSARCHIV. Daraufhin werden die zum Eintrag "Zwischencode" in der Variablen "scan" gehörenden Datensätze der beiden Datenbanken angezeigt. Falls keine entsprechenden Datensätze gefunden werden, wird eine Meldung "Unbekannter Barcode" auf dem Display 8 des Funkscanners 3 ausgegeben.

### Beispiel 3:

Mit dem Funkscanner 3 wird ein Barcode 7 eingescannt, der einer Tournummer entspricht. Die Formatinformation "Code-Typ" des Barcodes 7 enthält dann den Wert "CODE39", während die Formatinformation "Länge" des decodierten Zwischencodes den Inhalt "8" hat. Die Formatinformation "Datentyp" des decodierten Zwischencodes hat den Inhalt "Alphanumerisch".

In einem ersten Prüfschritt wird überprüft, ob die Datenbank-Tabelle gemäß Figur 2 eine Zeile aufweist, die eine Übereinstimmung hinsichtlich des Inhalts der Variable "Länge" der Variablen "scan" aufweist. Hier ergeben sich insgesamt drei übereinstimmende Zeilen. In einem zweiten Prüfschritt wird überprüft, ob sich hinsichtlich des Inhalts der Variablen "Code-Typ" der Variablen "scan" Übereinstimmungen mit einer oder mehreren der drei im ersten Prüfschritt aufgefundenen Zeilen ergeben. Dabei ergibt sich genau eine Übereinstimmung, die auf einen "Internen Tabellentyp" TOUR hinweist. Daraufhin wird in der Datenbank-Tabelle gemäß Figur 3 herausgefunden, daß der "Interne Tabellentyp" TOUR auf die "Datenbank" STAMMDATEN hinweist, und zwar auf eine "Tabelle" TOUR mit einem "Feld" TOURNUMMER. Schließlich wird in dieser Datenbank bzw. Tabelle derjenige Datensatz angezeigt, dessen "Feld" TOURNUMMER dem Inhalt dem Zwischencode der Variablen "scan" entspricht. Wenn keine Datensätze aufgefunden werden, wird eine Meldung "Unbekannter Barcode" angezeigt.

### Beispiel 4:

Es wird ein Barcode 7 eingescannt, der eine Tournummer wiedergibt. Die Formatinformation "Code-Typ" des Barcodes 7 enthält den Wert "CODE39". Die Formatinformation "Länge" des Zwischencodes enthält den Wert "6" und die Formatinformation "Datentyp" des Zwischencodes enthält den Wert "Alphanumerisch".

In einem ersten Prüfschritt wird der Inhalt der Variablen "Länge" auf Übereinstimmung mit allen Zeilen der Datenbank-Tabelle gemäß Figur 2 überprüft. Dabei werden insgesamt fünf Zeilen gefunden, die hinsichtlich der "Länge" Übereinstimmungen aufweisen.

In einem zweiten Prüfschritt wird der Inhalt der Variablen "Code-Typ" der Variablen "scan" auf Übereinstimmungen mit denjenigen Zeilen der Datenbank-Tabelle aus Figur 2 überprüft, die bereits Übereinstimmungen hinsichtlich der Variablen "Länge" aufweisen. Dabei ergeben sich insgesamt vier übereinstimmende Zeilen.

Im dritten Prüfschritt wird überprüft, ob der Inhalt der Variablen "Datentyp" der Variablen "scan" mit einer derjenigen Zeilen der Datenbank-Tabelle gemäß Figur 2 übereinstimmt, die bereits Übereinstimmungen hinsichtlich der Variablen "Länge" und "Code-Typ" aufweisen. Dabei ergeben sich insgesamt vier übereinstimmende Zeilen, die sowohl hinsichtlich des "Code-Typs" von "CODE39", hinsichtlich der "Länge" von "6" und des "Datentyps" von "Alphanumerisch" übereinstimmen. Daraus ergeben sich gemäß der Barcode-Tabelle die "Internen Tabellentypen" TOUR, KUNDE, LAGERORT, BEHAELTER.

Daraufhin werden die durch Übereinstimmungen aufgefundenen Internen Tabellentypen über die Datenbank-Tabelle aus Figur 3 jeweils den Datenbanken STAMMDATEN, LAGERDATEN und AUFTRAGSDATEN zugeordnet, wobei die Tabellen TOUR, KUNDE, LAGERDATEN und AUFTRAEGE ausgewählt werden. Schließlich werden die den Zwischencodes entsprechenden Datensätze der jeweiligen Tabellen abgefragt und angezeigt. Wenn keine Daten gefunden werden, wird die Meldung "unbekannter Barcode" angezeigt.

An Beispiel 4 sieht man besonders gut, wie das erfindungsgemäße Verfahren optimiert durchführbar ist, wenn mehrere Prüfschritte bei der Überprüfung der Formatinformationen des Barcodes 7 bzw. des Zwischencodes durchgeführt werden. Dabei wird in den ersten Prüfschritten vorzugsweise nach denjenigen Formatinformationen unterschieden, die ein rasches Ausscheiden von Auswahlmöglichkeiten erlauben.

Im vorliegenden Fall bedeutet dies, daß im ersten Prüfschritt nach der Formatinformation "Länge" unterschieden wird, zu der es gemäß der Barcode-Tabelle zehn unterschiedliche Werte gibt. Im zweiten Prüfschritt wird nach der Formatinformation "Code-Typ" unterschieden, zu der es fünf unterschiedliche Werte gibt. Im dritten Prüfschritt wird nach der Formatinformation "Datentyp" unterschieden, zu der es nur zwei unterschiedliche Werte in der Barcode-Tabelle gibt.

### Beispiel 5:

Bei der Datenanzeige wurde eine Stationsnummer gefunden. Angezeigt werden nun die folgenden Stationsinformationen: Stationsnahme, Stationsnummer, Anzahl der aktiven Behälter in der Station, Statistiken der Station usw.

Durch Drücken einer ENTER-Taste auf dem Zentralrechner 3 wird eine Liste aller Behälter in dieser Station angezeigt. Aus dieser Liste kann nun wiederum per Scan oder Auswahl mit Pfeiltasten ein Behälter ausgewählt werden, da sich die Behälter physikalisch in der betreffenden Station befinden. Nun werden die Behälterinformationen so angezeigt, als hätte man die Behälternummer gescannt, ohne vorher die Stationsnummer zu scannen: Behälternummer, Auftragsnummer, Kundenname, Tour, Offene Stationen. Durch Drücken der ENTER-Taste wird eine Liste aller im Behälter befindlichen Produkte angezeigt. Aus dieser Liste kann nun wiederum per Scan oder per Auswahl mit Pfeiltasten auf dem Zentralrechner 2 ein Produkt ausgewählt werden, da sich die Produkte physikalisch im Behälter befinden. Angezeigt werden nun die Auftragszeileninformationen wie Produktname, Produktnummer, Sollstückzahl, Iststückzahl, Kommissionierstatus usw.

Durch erneutes Drücken der ENTER-Taste wird die Produktinformation so angezeigt, als hätte man die Produktnummer gescannt, ohne vorher eine Stationsnummer oder eine Behälternummer zu scannen: Produktname, Lagerort, Hersteller, Stückzahl im Lager.

Es sei noch angemerkt, daß in den Unteransprüchen enthaltene selbständig schutzfähige Merkmale trotz der vorgenommenen formalen Rückbeziehung auf den Hauptanspruch entsprechenden eigenständigen Schutz haben sollen. Im übrigen fallen sämtliche in den gesamten Anmeldungsunterlagen enthaltenen erfinderischen Merkmale in den Schutzumfang der Erfindung.

### Bezugszeichenliste

- 1: Computersystem
- 2: Zentralrechner
- 3: Funkscanner
- 4: Funkscannerantenne
- 5: Zentralrechnerantenne
- 6: Barcodeleseeinrichtung
- 7: Barcode
- 8: Display
- 9: Steuerungseinheit
- 10: Datenbank

## Patentansprüche

1. Verfahren zum Betreiben eines Computersystems (1) mit mehreren Datenbanken (10) mit jeweils einer Vielzahl von Datensätzen, wobei jedem Datensatz wenigstens ein Zwischencode zugeordnet ist und wobei Zwischencodes je einer Datenbank (10) wenigstens eine übereinstimmende Formatinformation ("Code-Typ", "Länge", "Datentyp") aufweisen, wobei das Verfahren die folgenden Schritte aufweist:
- Einlesen eines externen Codes (7),
- Umwandeln des externen Codes (7) in einen Zwischencode,
- Dekodieren von Formatinformationen ("Code-Typ", "Länge", "Datentyp") aus dem Zwischencode und/oder aus dem externen Code (7),
- Auswählen wenigstens einer Datenbank (10) in Abhängigkeit der Formatinformationen ("Code-Typ", "Länge", "Datentyp"),
- Auswählen eines dem Zwischencode zugeordneten Datensatzes bzw. Auswählen von dem Zwischencode zugeordneten Datensätzen aus der ausgewählten Datenbank (10) bzw. aus den ausgewählten Datenbanken.

2. Verfahren nach Anspruch 1,
dadurch gekennzeichnet, daß
der Schritt des Decodierens von Formatinformationen ("Länge", "Datentyp") aus dem Zwischencode den Schritt des Bestimmens der Länge des Zwischencodes umfaßt.

3. Verfahren nach Anspruch 1 oder Anspruch 2,
dadurch gekennzeichnet, daß
der Schritt des Decodierens von Formatinformationen ("Länge", "Datentyp") aus dem Zwischencode den Schritt des Bestimmens eines Datentyps des Zwischencodes umfaßt.

4. Verfahren nach einem der vorhergehenden Ansprüche,
dadurch gekennzeichnet, daß
der Schritt des Decodierens von Formatinformationen ("Code-Typ") aus dem externen Code (7) den Schritt des Bestimmens einer Codierungsart des externen Codes (7) umfaßt.

5. Verfahren nach einem der vorhergehenden Ansprüche,
dadurch gekennzeichnet, daß
daß der Schritt des Anzeigens des dem Zwischencode zugeordneten Datensatzes bzw. der dem Zwischencode zugeordneten Datensätze vorgesehen ist.

6. Verfahren nach einem der vorhergehenden Ansprüche,
dadurch gekennzeichnet, daß
der Schritt des Anzeigens einer "Unbekannter Barcode"-Meldung vorgesehen ist, sofern kein dem Zwischencode zugeordneter Datensatz ausgewählt werden kann.

7. Verfahren nach einem der vorhergehenden Ansprüche,
dadurch gekennzeichnet, daß
der Schritt des Einlesens eines externen Codes den Schritt des Einlesens eines Barcodes (7) umfaßt.

8. Computersystem (1), das die folgenden Merkmale aufweist:
- mehrere Datenbanken (10) mit jeweils einer Vielzahl von Datensätzen, wobei jedem Datensatz wenigstens ein Zwischencode zugeordnet ist und wobei Zwischencodes je einer Datenbank (10) wenigstens eine übereinstimmende Formatinformation ("Code-Typ", "Länge", "Datentyp") aufweisen,
- wenigstens eine Leseeinrichtung (3) zum Einlesen eines externen Codes (7),
wobei das Computersystem (1) so ausgebildet ist, daß
- der externe Code (7) in einen Zwischencode umwandelbar ist,
- Formatinformationen ("Code-Typ", "Länge", "Datentyp") aus dem Zwischencode und/oder aus dem externen Code (7) dekodierbar sind,
- wenigstens eine Datenbank (10) in Abhängigkeit der Formatinformationen ("Code-Typ", "Länge", "Datentyp") auswählbar ist,
- wenigstens ein dem Zwischencode zugeordneter Datensatz aus der ausgewählten Datenbank (10) bzw. aus den ausgewählten Datenbanken auswählbar ist.

9. Computersystem nach Anspruch 8,
dadurch gekennzeichnet, daß
zum Decodieren von Formatinformationen ("Länge", "Datentyp") aus dem Zwischencode die Länge des Zwischencodes bestimmbar ist.

10. Verfahren nach Anspruch 8 oder Anspruch 9,
dadurch gekennzeichnet, daß
zum Decodieren von Formatinformationen ("Länge", "Datentyp") aus dem Zwischencode ein Datentyps des Zwischencodes bestimmbar ist.

11. Computersystem nach einem der Ansprüche 8 bis 10,
dadurch gekennzeichnet, daß
zum Decodieren von Formatinformationen ("Code-Typ") aus dem externen Code (7) eine Codierungsart des externen Codes (7) bestimmbar ist.

12. Computersystem nach einem der Ansprüche 8 bis 11,
dadurch gekennzeichnet, daß
daß eine Anzeigeeinrichtung (8) zum Anzeigen des dem Zwischencode zugeordneten Datensatzes bzw. der dem Zwischencode zugeordneten Datensätze vorgesehen ist.

13. Computersystem nach Anspruch 12,
dadurch gekennzeichnet, daß
einer "Unbekannter Barcode"-Meldung auf der Anzeigeeinrichtung (8) anzeigbar ist, sofern kein dem Zwischencode zugeordneter Datensatz vorhanden ist.

14. Computersystem nach einem der Ansprüche 7 bis 13,
dadurch gekennzeichnet, daß
die Leseeinrichtung (3) zum Einlesen eines externen Codes (7) einen Barcodeleser (6) aufweist.
